(19) **Europäisches Patentamt European Patent Office Office européen des brevets**

(11) **EP 4 704 011 A1**

(12) **EUROPEAN PATENT APPLICATION**

(43) Date of publication:
04.03.2026 Bulletin 2026/10

(21) Application number: 24196629.0

(22) Date of filing: 27.08.2024

(51) International Patent Classification (IPC):
*G06Q 30/018* (2023.01)   *G06Q 10/04* (2023.01)
*G06Q 10/063* (2023.01)

(52) Cooperative Patent Classification (CPC):
**G06Q 30/018; G06Q 10/04; G06Q 10/063**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Siemens Aktiengesellschaft
80333 München (DE)**

(72) Inventors:
• **Kvaratskhelia, Lika
1495-105 Algés (PT)**
• **Moody, Robert
Knutsford, WA16 8DE (GB)**

• **Bardenhagen, Cedric
70435 Stuttgart (DE)**
• **Germano Nunes, Kristína
160 00 Prague (CZ)**
• **Coy, Christian
91353 Hausen (DE)**

(74) Representative: **Siemens Patent Attorneys
Postfach 22 16 34
80506 München (DE)**

Remarks:
A request for correction of the description has been filed pursuant to Rule 139 EPC. A decision on the request will be taken during the proceedings before the Examining Division (Guidelines for Examination in the EPO, A-V, 3.).

(54) **MASS PRODUCTION OF ENVIRONMENTAL PRODUCT DECLARATIONS**

(57)    A method and system for the mass production of Environmental Product Declarations (EPDs) for products is described. The EPD relies on the production of a Life Cycle Analysis (LCA) using a scaling approach based on representative products.

FIG. 4

EP 4 704 011 A1

Processed by Luminess, 75001 PARIS (FR)

**Description**

The present invention relates to a computer-implemented method of generating data required for the publication of Environmental Product Declarations (EPDs) for each member of a Homogenous Product Family (HPF) of products, a computer-implemented method of generating an Environmental Product Declaration (EPD) on-demand and an Environmental Product Declaration (EPD) publishing system.

An Environmental Product Declaration (EPD) is defined as a Type III declaration according to ISO 14025, which "*...provides quantified environmental information from the life cycle of a product to enable comparisons between products of the same function...*". It is based on a Life Cycle Assessment (LCA) as specified in ISO 14040 for calculating the environmental impacts of a product. Companies face increasing regulatory and economic pressures to establish EPDs for their product portfolios, with the EPD Type III declaration being considered the accepted standard in this regard.

Life Cycle Assessments encounter various difficulties in practice, particularly when used for electronic products (for example, drives and inverters). These include:

- Acquisition of primary data (direct measurement at the manufacturing sites) and the availability and use of secondary data (generic LCA datasets e.g. using the GaBi or Ecoinvent database) is subject to significant uncertainties in modelling and application of LCAs
- Electronic products typically undergo rapid technological change and development, which may complicate the longer-term accuracy and availability of data, and updated product descriptions require updated LCAs;
- Conducting LCAs is resource intensive and therefore costly, since aside from data acquisition costs, each LCA is time-consuming to complete from a personnel perspective. Since customers often expect a quick turnaround it may be tempting to employ a number of assumptions that lead to a high susceptibility to errors to meet such timescales;
- Performing an LCA requires a high level of expertise, requiring both training and deep product portfolio knowledge. Typically, however, product experts lack LCA training and LCA experts lack in-depth product knowledge;
- Precautions need to be taken to prevent accusations of "greenwashing", or the conscious provision of a positive declaration of the environmental impacts of a product. However, since the relationships between the inputs and outputs of an LCA are complex, such greenwashing may be inadvertently trigged by inadequacy and inconsistency in the calculation methodology and data quality;
- Given the need for the calculation of Scope 3 emissions for all stakeholders in a supply chain, suppliers are relied on heavily to provide EPDs to enable this.

Given the resources and data required to generate the EPDs that are required for even a small electronic product portfolio, there has been an increasing need for the mass generation of EPDs, generating EPDs for groups of products at a time. The few existing methodologies and their input data focus on the environmental impact category of Global Warming Potentials, or GWPs. However, EPDs required a comprehensive consideration of all environmental impact categories, not just a focus on a single impact category. One way in which the generation of EPDs for all members of an HPF is tackled is to use scaling parameters, applying a product weighting parameter as a means of overcoming the effort required to calculate each EPD of an HPF separately as well as widening the focus to all environmental impact categories. However, the EPD may be adversely affected by the limitation to a single scaling parameter, since the extrapolation of other environmental impact categories are affected differently by individual product characteristics, such as changes in weight, size, power and so on. It is usual to scale the results of an EPD for a product portfolio using a simple linear ($y = mx + c$) regression approach. However, product structure complexities and configurations are not well represented by relying on just one independent variable, and therefore such a simple approach is often prone to errors. In fields such as optimisation of product performance through eco-design, accurate environmental data predictions are required to ensure that the subsequent reliance on the LCA and EPD is not adversely affected. Where an EPD is to be scaled, careful consideration of regression values is required since extrapolation of these points should not itself be a cause of issues with the resulting EPDs. Since the EPD also comprises additional parameters to just the pure LCA data, selection of an appropriate reference product is key to ensuring that the mass generation of EPDs is as accurate as possible. However, to date, no uniform approach exists to dealing with either of these issues.

One attempt to deal with some of these challenges has been the introduction of so-called Homogeneous Product Families (HPF) to facilitate the mass production of EPDs. According to EN 50693, a Homogeneous Product Family exhibits the following criteria:

1. Each product within the family has the same main functionality;
2. Each product is subject to the same product standards;
3. Each product has the same manufacturing processes and material composition.

Within HPFs, EN 50693 allows for the extrapolation of environmental impacts after identifying a reference product. The procedure for such extrapolation is described as follows:

- Perform the LCA of representative products of the homogenous product family.
- Identify and quantify the products parameters (physical characteristics) that vary between the different products of the homogenous product family (for example, including but not limited to, dimensions, weight of parts, materials and energy consumption) and run a sensitivity analysis to identify influential parameters and define an extrapolation rule.

The reference product of the HPF according to EN 50693 may or may not be part of the representative products chosen to calculate the extrapolation rule. If it is not, a LCA has to be calculated separately for the reference product.

Furthermore, some of the recognised EPD Type III certifying bodies provide the option to create group EPDs in response to specific challenges. One example of this is EPD International, which is an internationally recognised standard and aims for harmonisation among EPD certifiers through the so-called ECO-Platform. In the upcoming Product Category rules for products, there are the following options for declaring multiple products within one EPD (EPD International 2024, page 27):

- *For each indicator, declare the average results of the included products. This average shall be weighted according to the production volumes of the included products, if relevant. In this option, the average content shall be declared in the content declaration.*
- *Declare the results of one of the included products - a representative product. The choice of the representative product shall be justified in the EPD, using, where applicable, statistical parameters. For example, the choice may be based on production volumes. In this option, the content of the representative product shall be declared in the content declaration. For each indicator, declare the highest result of the included products (i.e., the results of a "worst-case product", which may be the results of one or several of the included products). In this option, the content declaration shall include the lowest amounts of recycled and biogenic content of the included products and their packaging, respectively, and the information on environmental and hazardous properties of substances shall reflect the highest share and most hazardous such substances contained in the any of the included products.*
- *The first two options are only possible if none of the declared environmental impact indicator results differ by more than 10% between any of the included products. The third option is possible also if variations are larger than 10%.*

Whilst these options aid in the generation of group EPDs, the requirement of a maximum variation of 10 % in the respective impact indicators is not applicable to larger product portfolios containing homogeneous products of different sizes. Therefore, there is still a need for a reliable, reproducible and above all accurate method for the mass-production of EPDs that meets the scale and requirements of a typical electronic product portfolio.

The present invention aims to address these issues by providing, in a first aspect, a computer-implemented method of generating an Environmental Product Declaration (EPD) for a product, comprising: i) generating the base data required for an EPD by: a) defining a Homogeneous Product Family (HPF) comprising a plurality of products having similar functions, product standards, materials and manufacturing processes; b) querying a product database to obtain product structure parameters and product function parameters for each member of the HPF; c) selecting at least three representative members of the HPF; d) conducting an LCA according to ISO 14040 for the identified representative members of the HPF over a plurality of environmental impact categories; e) determining a scaling function using multiparameter linear regression for each environmental impact category based upon at least one parameter pair comprising a product structure factor and a product function parameter obtained from the product database; f) determining a quality indicator indicating the quality of the scaling function; g) for a quality indicator greater than or equal to a pre-determined threshold, storing the respective scaling functions with the product data for the corresponding product in the HPF in the product database; and h) determining and associating a reference product to provide base data required for an EPD with each product in the HPF; and, ii) generating an EPD by: i) selecting a product in the product database for which the base data required for the EPD is available; j) accessing the respective scaling functions within the product's HPF for each environmental impact category from the product database, the product data of the associated reference product; and k) on the basis of the scaling functions, the base data and the product data of the associated reference product, generating the EPD for the selected product.

Using a scaling approach enables the mass generation of EPDs based on a selected number of representative products based on a data-driven methodology. This removes the need for experts to select such representative products, and enables the on-demand generation of EPDs. This approach is particularly suitable for electrical products.

The associated reference product may be one of the representative members of the HPF.

Preferably, the EPD is generated on-demand. The base data for the EPD may also be generated on-demand.

Preferably, the step of selecting the at least three representative members from the HPF comprises assigning each member of the HPF an n-dimensional vector ins a n-dimensional product characteristic space based upon the product parameters, wherein the product parameters comprise at least one structure parameter and function parameter.

Preferably, a clustering method is used to determine the proximity of the assigned $n$-dimensional vector to the $n$-dimensional cluster centre. Preferably, the clustering method is $k$-means. Preferably, the three representative members of the HPF are selected on the basis of the nearest neighbour to a cluster centre.

A confidence interval may be applied to the cluster centre, and the three representative members of the HPF are selected on the basis of the confidence interval and an economic criterion.

Preferably, if the quality indicator is below a pre-determined threshold, the method further comprises optimising the scaling function based on at least one of: selecting a new representative member of the HPF; determining a scaling function for every possible pair of structure parameters and function parameters stored in the product database for each member of the HPF; or revising the members of the HPF.

Preferably, the step of determining the scaling functions comprises determining a scaling function for every possible pair of structure parameters and function parameters stored in the product database for each member of the HPF.

Preferably, the quality indicator is an adjusted $R^2$ value.

The generated EPD may be published either in a downloadable file format or as data storable as a database entry.

In a second aspect, the present invention also provides an Environmental Product Declaration (EPD) publishing system, comprising: a product database comprising product structure parameters and product function parameters for each member of a Homogeneous Product Family (HPF); a processor adapted to carry out the computer implemented method of any preceding claim: an accessible storage device adapted to store the structure parameters, product function parameters and scaling parameters for each member of the HPF; wherein the processor and the product database are adapted to communicate via an application layer on the processor, and the processor and the accessible storage device are linked by a memory bus.

Preferably, the system further comprises a user input device linked to the processor via a communication bus and a user output device linked to the processor via a graphics card, wherein the user input device enables a user to select a member of the HPF and the user output device enables a user to read or download the published EPD.

Preferably, the HPF is defined in accordance with EN 50693:2019, the LCA is calculated in accordance with ISO 14040 and the EPD is published in accordance with (ISO) 14025.

The invention will now be described by way of example only, and with reference to the accompanying drawings, in which:

Figure 1 is a flow chart illustrating a computer-implemented method of generating data required for generating an EPD for a product in accordance with embodiments of the present invention;

Figure 2 is a schematic representation of the initial definition of an HPF in accordance with embodiments of the present invention;

Figure 3 is a chart showing the influence of the selection of representative products on the scaling of environmental impacts;

Figure 4 is a chart showing the influence selecting of an average representative products on the scaling of environmental impacts;

Figure 5 is a chart illustrating the distribution of products in a dataset based on two scaling parameters;

Figure 6 is a chart illustrating the clustering of a product dataset based on two scaling parameters;

Figure 7 is a schematic diagram of an EPD publishing system; and

Figure 8 is a chart showing the clustering of G120M products;

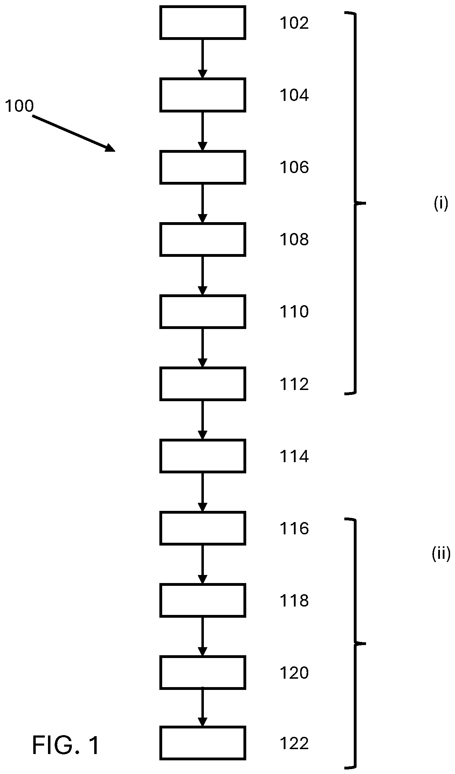

The embodiments and examples described below take an approach to the mass-production of Environmental Product Declarations (EPDs) for products based on scaling the environmental impacts of a number of representative products. Figure 1 is a flow chart illustrating a computer-implemented method of generating data required for generating an EPD for a product in accordance with embodiments of the present invention. The method 100 is split into two main stages: stage i) comprises steps 102 to 116 for generating the based data required for an EPD, and stage ii) comprises steps 118 to 122 for generating the EPD itself. At step 102, the first stage begins with defining an HPF comprising a plurality of products having similar functions, product standards, materials and manufacturing processes. As described in more detail below, the HPF is defined in accordance with EN 50693:1019. Next, at step 104, a product database is queried to obtain product structure parameters and product function parameters for each member of the HPF. Once this data is available, at step 106, at least three representative members of the HPF are selected in order to avoid regression issues later on. At step 108, an LCA is conducted according to ISO 14040 for each representative member of the HPF over a plurality of environmental impact categories. A scaling function is determined at step 110, using multiparameter linear regression, for each environmental impact category based upon at least one parameter pair comprising a product structure factor and a product function parameter obtained from the product database. Once this is done, at step 112, a quality indicator indicating the quality of the scaling function . At step 114, where the quality indicator is greater than or equal to a pre-determined threshold, the respective scaling functions are stored with the product data for the corresponding product in the HPF in the product database. The final step in the first stage i), step 116, involves determining and associating a reference product to provide product data required for an EPD with each product in the HPF. This reference product may be chosen either using an economic criterion, such as the sales figures, or may be one of the representative products chosen earlier. If the reference product is not one of the representatives chosen, an additional LCA must be conducted to be compliant with EN 50693. The second stage, generating the EPD at stage ii), comprises, at step 118, selecting a product in the product database for which the base data required for the EPD is available. Next, at step 120, the respective scaling functions within the product's HPF for each environmental impact category are accessed from the product database, along with the product data of the associated reference product. Finally, at step 122, on the basis of the scaling functions, the base data and the product data of the associated reference product, the EPD for the selected product is generated. Considering a two-stage approach enables not only the generation of EPDs on demand, by carrying out the first stage prior to enabling access to the product database and allowing generation of the EPD in real time once database access is established, but also enables the entire process to be carried out on-demand for new groups of products. Once generated, the EPD is published either in a downloadable file format or as data storable as a database entry. In each example below, the HPF is defined in accordance with EN 50693:2019, the LCA is calculated in accordance with ISO 14040 and the EPD is published in accordance with (ISO) 14025. The LCA is an in-depth analysis of the environmental impact of a product. However, the EPD takes the results of the LCA, and presents these, any assumptions made in generating the LCA and the product data, in a short clear and concise format.

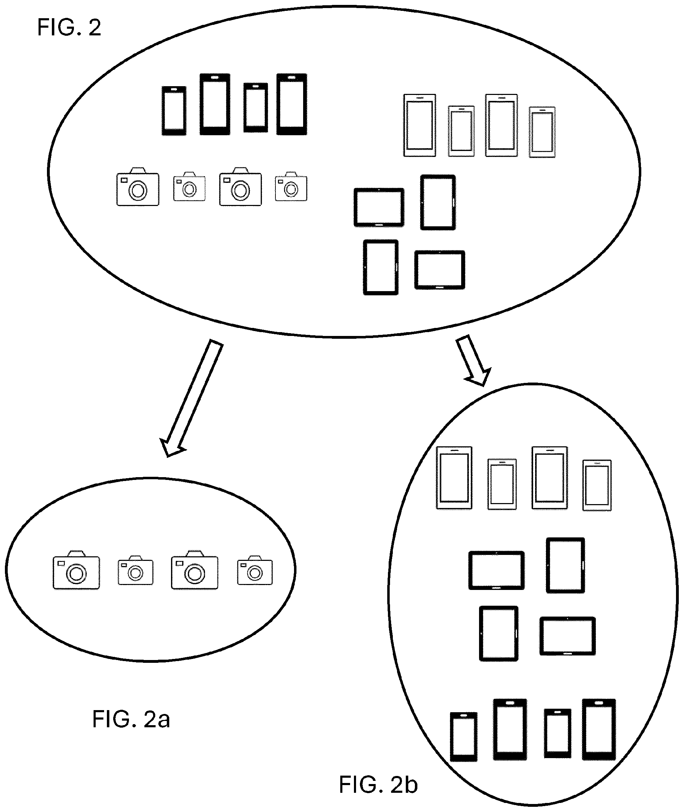

Figure 2 is a schematic representation of the initial definition of an HPF in accordance with embodiments of the present invention. As described in EN 50693, the definition of a Homogeneous Product Family requires products to have the same main functions, the same product standards, and similar manufacturing technology (in terms of types of material composition and manufacturing processes). By meeting these criteria, it may be assumed that the environmental impacts across the products within the HPF are scalable. Figure 2a shows a schematic representation of a group of products that have been initially grouped together based on their function. As a simple example, hand-held electronic devices that are able to take a digital photograph are shown. The initial group is based on this product feature, and therefore contains smartphones and tablets corresponding to different software protocols (for example, Apple™ and Android™) as well as digital cameras. However, smartphones and tablets may share a photographic function with digital cameras, but they do not share the same main function. Therefore, in order to meet the definition provided in EN 50693, it is necessary to split this broad group into two in order to meet the same main function requirement. This is illustrated in Figures 2b and 2c, where smartphones and tablets are shown in a first initial HPF (Figure 2b) and digital cameras are shown in a second (Figure 2c).

The definition of the scaling functions requires that the *"function of certain physical characteristics"* must be determined in order to meet the requirements of EN 50693, starting with the determination of scaling parameters. Scaling parameters are product characteristics that provide insights into the environmental impacts of the product. Several aspects are considered when determining scaling parameters:

- Continuous values are preferred as the scaling function usually represents some sort of linear regression over the scaling parameter, meaning that discrete values should be avoided;
- Individual parameters reflect different environmental categories to varying degrees, such as product weight providing accurate information about climate impact, other parameters, such as materials definitions, can provide information on other impacts, such as toxicity.
- It is also preferred for any data access for such scaling parameters to be quick, so that information from supplier surveys or detailed bills of materials are not suitable. One solution that the embodiments of the present invention use is a linked product database.
- It is also advisable to initially consider both geometric properties (such as weight and volume) and parameters that characterise product function (such as rated power and output current).

Scaling parameters are used to represent the material composition and product structure in a generic manner. Therefore, they may be regarded as proxy variables for environmental impacts. Considering the complex product structure of electronic products, a multiparameter approach is taken in the embodiments of the present invention, since relying on a single parameter risks losing information on product composition, meaning its effects in the respective environmental impact categories is also lost. The selection of scaling parameters is also heavily dependent on product data availability. Since the use of scaling aims to accelerate the process of generating a LCA, it is preferable to utilise existing product databases and avoid engaging in manual data collection methods. Structure or geometric product parameters that characterise the structure of the product (including, but not limited to, weight, volume, size, materials, current, voltage, resistance, capacitance, reluctance) and the function of the product (including, but not limited to, performance, power loss, power consumption, operating temperature) are preselected. This means that not only are non-numerical data values excluded, but any parameters where there is an incomplete data set across the HPF or there are variable values for the same product within the data set across the HPF are excluded. This is to ensure consistency and significance within the data set used to generate scaling functions.

In order to carry out an initial calculation of the scaling function, the LCA of three representative products is conducted. EN 50598-3 states that one product with a low expected environmental impact, one with a medium environmental impact and one with a high environmental impact should be selected. Since, at this stage, the environmental impacts of the products within the HPF are unknown, the proxy variables in the form of the scaling parameters are used to carry out an estimation of the environmental impact.

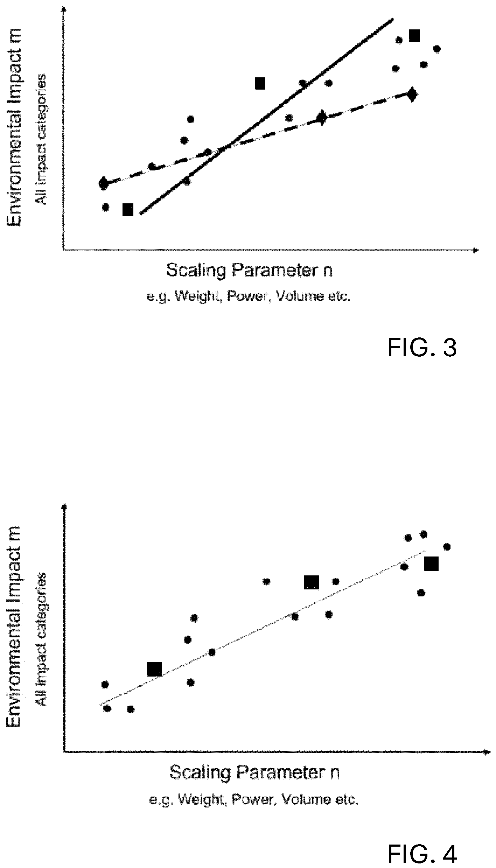

Figure 3 is a chart showing the influence of the selection of representative products on the scaling of environmental impacts. Figure 3 illustrates the relationship between a scaling parameter $n$ and an environmental impact $m$ for a number of product variants (represented by closed circles). It is expected that due to basic physical principles, the relationship between a scaling parameter $n$ and its environmental impact $m$ is directly proportional. However, in practice a variability within the data set is to be expected, as illustrated by the variation shown in Figure 3. This is in part due to the product data itself, where, for example, if product A contains 10 more screws than product B, the weight is rounded to the same figure for both, but the environmental impact will differ. However, a homogeneous product family will never be completely homogeneous, therefore in practice, an acceptable degree of heterogeneity occurs within the HPF that leads to variability in the data set variation can therefore affect the scaled environmental impact, depending upon which representative products are selected. Figure 3 illustrates two scenarios where the choice of representative products will affect the scaled environmental impact. The first regression line, illustrated here as a solid line, is based on the three product variants illustrated by closed squares over-represents the environmental impacts of larger product variants. Almost all data points lie above the regression line, indicating a false-negative declaration of a product's environmental impacts, or greenwashing. The second regression line, illustrated here as a broken line, is based on the three product variants illustrated by closed diamonds, under-represents the environmental impacts of the larger product variants. This creates a false-positive declaration of the environmental impacts and risks harming a company's reporting of environmental impacts and possible future product sales. Therefore, merely using low, medium or high environmental impacts is not sufficient for adequate representation of a homogenous product family.

The embodiments of the present invention deal with this issue by selecting the average product within the low, medium or high environmental impact group. This avoids making false-positive and false negative environmental declarations. This is illustrated schematically in Figure 4. Figure 4 is a chart showing the influence selecting of an average representative products on the scaling of environmental impacts. An average product is defined as the product with the average product features and characteristics of the respective HPF. Figure 4 illustrates the relationship between a scaling parameter $n$ and an environmental impact $m$ for a number of product variants (represented by closed circles) that fall within a low, medium or high environmental impact group. Within each of these impact groups, a single product variant can be chosen (as shown by the closed squares) that has the average features of that HPF as the representative product. Once this is done, a regression line can be calculated using the average product in each HPF as a data point. This results in a regression value that represents the HPFs much more accurately, and reduces the likelihood of an inaccurate EPD being produced.

The identification of the representative product is therefore an important step in the process of generating an EPD. The method used to identify these in the embodiments of the present invention is based on a clustering approach, where all suitable scaling parameters are included within the clustering calculation. Since these scaling parameters correspond to product characteristics, this leads to a comprehensive assessment of a product, enabling the determination of the average product structure based on a comprehensive assessment of the product. In the approach outlined below, two scaling parameters are used as an example, a pair comprising one geometric and one functional, however, the use of more than one pair of scaling parameters for clustering can also be advantageous, and ensures that not product feature that may be relevant to an EPD is under-represented.

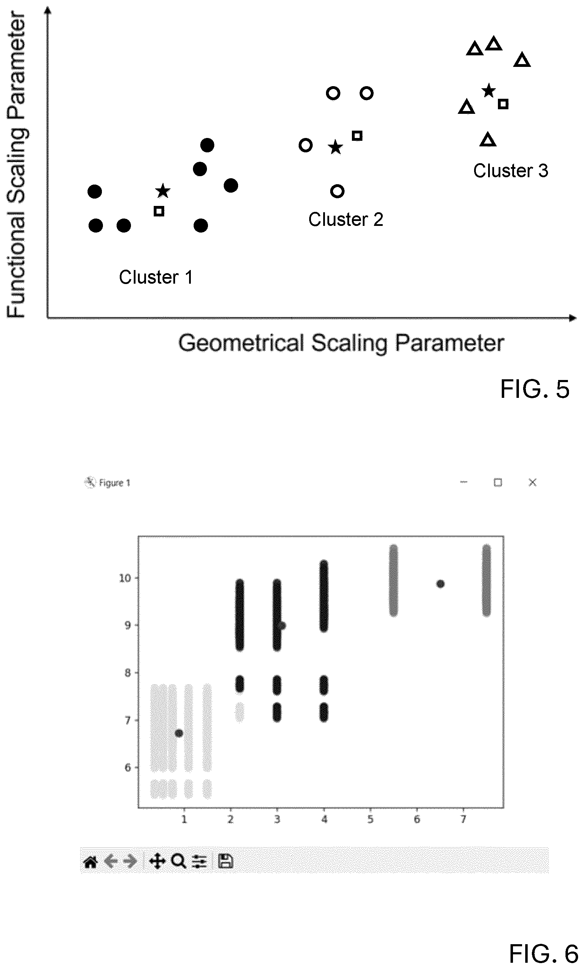

Whilst, in general, any clustering method may be used, this example employs k-means clustering, from which the outcome is a set of k clusters, where each cluster is represented by its centroid. These clusters aim to minimise the intra-cluster distance (distance between data points within the cluster) and maximise the inter-cluster distance (distance between the clusters themselves). Alternatives to $k$-means clustering include other centroid-based clustering algorithms, density-based clustering algorithms (such as DBSCAN and HDBSCAN), model-based clustering algorithms (such as Gaussian mixture model clustering), and hierarchical clustering algorithms (such as linkage clustering). The distribution of products occurs in an $n$-dimensional product characteristic space. Each product is assigned an $n$-dimensional vector defined by its physical properties, and its proximity to the $n$-dimensional cluster centre vector is determined. Figure 5 is a chart illustrating the distribution of products in a dataset based on two scaling parameters. The geometric scaling parameter ($x$-axis) is plotted against the functional scaling parameter ($y$-axis), and the clustering value ($k$) is chosen as three (representing low, medium and high environmental impact groups as in Figures 3 and 4 above). This is possible since the scaling parameters represent proxy values for the respective environmental impacts. The average product is calculated in each product cluster as that which is closest to the cluster centre. In each cluster shown in Figure 5, the mathematical centre is marked with a star, and the product variant closest to the mathematical centre is marked with a solid square. Although in this example the value of $k$ has been chosen as 3, for large of heterogeneous product families the $k$-means algorithm may be used to calculate the optimal number of clusters, since this will increase the accuracy of the resulting regression analysis. In order to remove the impact of product features that vary widely in their value range (such as volume, typically a range of 0 to 2,000,000 mm$^3$ vs power, typically a range of 0 to 100 kW), normalisation of the scaling parameters is carried out, otherwise the clustering data may become distorted due to the higher weighting of parameters with greater differences between data points. Normalising the scaling parameters to a range of 0 to 1 weights all variables equally.

Figure 6 is a chart illustrating the clustering of a product dataset based on two scaling parameters. The product dataset chosen represented a large product family with over two thousand product configurations, which resulted in many data points being very close to each other. This also has the effect of creating many suitable "average" products, which requires the addition of a further criterion for selecting representative products in such large product datasets. One option for this additional criterion is to select the representative product based on the highest sales figures of products with closely positioned data points. For this purpose, the cluster centre may be expanded and provided with a confidence interval up to 5%, with 2% being used in this example. In other words, a range of values is defined for each product parameter within which appropriate representative products may lie. Table 1 is an example illustrating a clustering process based on volume and power:

*Table 1 - illustration of confidence intervals*

|  | Volume (mm$^3$) | Power (kW) |
|---|---|---|
| **Mathematical Cluster Centre** | 200,000 | 10 |
| 2% range | 196,000 - 204,000 | 9.8 - 10.2 |
| 5% range | 190,000 - 210,000 | 9.5 - 10.5 |

According to this example, all products with a volume between 196,000 and 204,000 mm$^3$ and a power between 9.8 and 10.2 kW fall within the 2% confidence interval, and all products with a volume between 190,000 and 210,000mm$^3$ and a power between 9.5 and 10.5 kW fall within the 5% confidence interval. Since the confidence interval is likely to include a range of products, a further criterion for selecting representative products is used. Rather than a second physical criterion, such as those used to determine the scaling parameters, an economic criterion is used. In this example, the economic criterion is sales figures, where the product within the confidence interval having the highest sales figures is chosen as the representative product. This is illustrated further in Table 2 below:

*Table 2: illustration of sales figures as a further criterion*

| Product | Volume (mm$^3$) | Power (kW) | Sales (no. of products) | Confidence Interval |
|---|---|---|---|---|
| **A** | 230,000 | 12 | 120 | n/a |
| **B** | 188,000 | 9.9 | 72 | n/a |
| **C** | 208,000 | 10.1 | 39 | 5% |
| **D** | **203,000** | **10.1** | **304** | **2%** |
| **E** | 140,000 | 7.2 | 409 | n/a |
| **F** | 207,000 | 10.3 | 66 | 5% |
| **G** | 198,000 | 10 | 154 | 2% |

Products A, B and E do not have both scaling parameters falling within a confidence range of either 2% or 5% for both volume and power. For those products that do have both scaling parameters falling within a confidence range, product D has the highest number of sales, and is therefore chosen as the representative product. As a result of this, the centroid of the cluster is shifted about 2% above the mathematical optimum, or average product. Whilst the inaccuracy per product is increased, the inaccuracy per sold product is decreased, thus meaning that customer transparency is increased. Therefore, a confidence interval up to 5% is deemed to be acceptable.

After selecting the representative product in each cluster based on physical criteria, and, for large product families, economic criteria, the environmental impacts of these selected representative products must be modelled and calculated. This is done, for each representative product, using the LCA (Life Cycle Analysis) methodology in ISO 14040. The calculation of three LCAs is the minimum required to obtain a straight line fit in a regression calculation, but to ensure that the scaling is as accurate as possible it may be desirable, dependent upon the product family in question, to calculate further LCAs to ensure that the regression analysis is representative for all members of the HPF. For example, if the k-means algorithm has been used to determine the optimum number of clusters, an LCA for each representative product per cluster should be calculated. The regression analysis is performed multiparametrically, with the maximum number of parameters for n data points being n-1. For the example of three representative products, as above, the regression may be conducted using two scaling parameters, $SP_1$, and $SP_2$, where the regression line forms the scaling function that will be used to scale the remaining members of the product family. This is done using Equation 1:

$$f_m(SP_1 SP_2) = sf_1 * SP_1 + sf_2 * SP_2 + a$$

Where:

- $f_m(SP1, SP2)$ is the environmental impact of impact category $m$;
- $sf$ is the scaling factor;
- $SP$ is the scaling parameter; and
- a is the intercept

To calculate the coefficients, the following equations are applied:

Equation 2:

$$sf_1 = \frac{\left[\left(\sum SP_2{}^2\right)\left(\sum SP_1\, y\right) - \left(\sum SP_1\, SP_2\right)\left(\sum SP_2 y\right)\right]}{\left[\left(\sum SP_1{}^2\right)\left(\sum SP_2{}^2\right) - \left(\sum SP_1 SP_2\right)^2\right]}$$

Equation 3:

$$sf_2 = \frac{\left[\left(\sum SP_1{}^2\right)\left(\sum SP_2\, y\right) - \left(\sum SP_1\, SP_2\right)\left(\sum SP_1 y\right)\right]}{\left[\left(\sum SP_1{}^2\right)\left(\sum SP_2{}^2\right) - \left(\sum SP_1 SP_2\right)^2\right]}$$

Equation 4:

$$a = \bar{y} - sf_1 \overline{SP_1} - sf_2 \overline{SP_2}$$

These equations are calculated separately for each environmental impact category, and as the respective environmental impacts scale differently in their progression and also with different parameters, each one receives a specific scaling function. All of the product characteristics that have been identified and used for clustering may be used to perform the regression calculation. Every possible combination of pairs of functional parameters and geometric parameters is calculated and evaluated according to scaling performance.

The evaluation of the scaling performance is done using a goodness-of-fit measure of the linear regression achieved for each functional and geometric parameter pair. One preferred manner in which this is done is to apply an R-squared ($R^2$) approach. An $R^2$ value of 0 indicates that no correlation is observed, and an $R^2$ value of 1 indicates that the model is a perfect fit. In the case of multiparametric regression, the adjusted $R^2$ value is chosen in cases of four representative products or more, as indicated in Equations 5 and 6:

Equation 5:

$$R^2 = 1 - \left(\frac{\sum(y_i - \hat{y}_i)^2}{\sum(y_i - \bar{y}_i)^2}\right)$$

Where $y_i$ are values of dependent variables (impact).

Equation 6:

$$Adjusted\ R^2 = 1 - \left[\frac{(1 - R^2) * (n - 1)}{(n - k - 1)}\right]$$

Where:

- $R^2$ is the $R^2$ of the model

- *n* is the number of representative products
- *k* is the number of scaling parameters

The quality of the scaling model is evaluated using the adjusted $R^2$ or $R^2$ value obtained. In order to determine an appropriate target $R^2$ value indicating that the scaling model is effective, the value of $R^2 = 0.97$ for converters given in the "Deutsche Kommission für Elektrotechnik (DKE) (2023): Ecodesign for power electronics including approach for EPDs and specifications for the material efficiency assessment, Annex B, is used in the absence of other values in relevant literature. Therefore, in each of the environmental impact categories, the combination of functional and geometric parameters yielding the highest $R^2$ value is chosen. These parameters may vary for each scaling function as the environmental impacts are represented by different product characteristics. For example, weight is considered to be a good indicator for the climate change impact category, but this may not be the case in other categories. For small, lightweight electronic components, which have a significant influence on factors such as toxicity indicators, energy consumption may be a better indicator in these environmental impact categories. It is also possible to adjust the acceptable target $R^2$ value dependent upon the Level of Recommendation of the environmental impact category, as given in JRC Technical Reports (2018), Supporting information to the characterisation factors of recommended EF Life Cycle Impact Assessment method, https://eplca.jrc.ec.europa.eu/permalink/supporting_Information_final.pdf. The Level of Recommendation indicates how accurately the environmental impacts have been modelled in the dataset. For example, Level III impact categories may not require such high target values of $R^2$. However, for Level I impact categories, should the target $R^2$ value not be achieved, the following optimisation methods may be considered.

Firstly, if three data points are not sufficient to adequately represent the product family, it may be necessary to model one or more additional data points. Additional representative products may be considered (following the *n*-1 approach described above), or polynomial regression may be used in place of linear regression should there be sufficient data points but a non-linearity of the corresponding environmental impacts. However, adding additional representative products as an iteration step runs the risk of changing the cluster structure overall, and therefore reducing the $R^2$ value. Therefore, where the original number of clusters is greater than three it is preferable that a representative product for each cluster is used in the regression analysis above.

Secondly, changing the combinations of scaling parameters may influence the $R^2$ value. If all of the combinations of available scaling parameters have been used then a further option is to obtain additional data. For example, if the original product family data did not include data on power loss or DC voltage then this can be gathered from product databases and literature and incorporated into the clustering and regression analysis process. Additional and/or new combinations of scaling parameters may yield a higher adjusted R2 value.

Thirdly, if the $R^2$ value is inadequate it may also indicate heterogeneity within an HPF. The initial definition of the HPF may not be sufficient if differences between product designs are not taken into account fully. One solution to this is to assume that each cluster represents a smaller HPF, and to re-run the analysis using the new homogeneous product families. Conversely, it may be that the $R^2$ value for a HPF is very high, and therefore it may be possible to merge the HPF with another HPF.

Once the scaling functions have been calculated it is possible to calculate the environmental impacts of the entire HPF from the LCAs calculated from the reference products. In addition to the LCA, however, an EPD also needs additional information about factors such as material composition, and therefore the LCA and scaling are combined with the information available regarding a reference product. This reference product does not have to be part of the regression calculation outlined above, but does need to be a representative member of the HPF based on either physical or economic criteria. An LCA is conducted for the reference product, and this is used as the basis for the EPD. Alternatively, the representative product from the middle cluster of the regression calculation may be used as the reference product in preference to conducting a further LCA. When publishing the resulting EPDs for the members of the HPF, it is conventional to normalise all of the environmental impacts to those of the representative product such that the representative product has a value of 1 for all environmental impact categories.

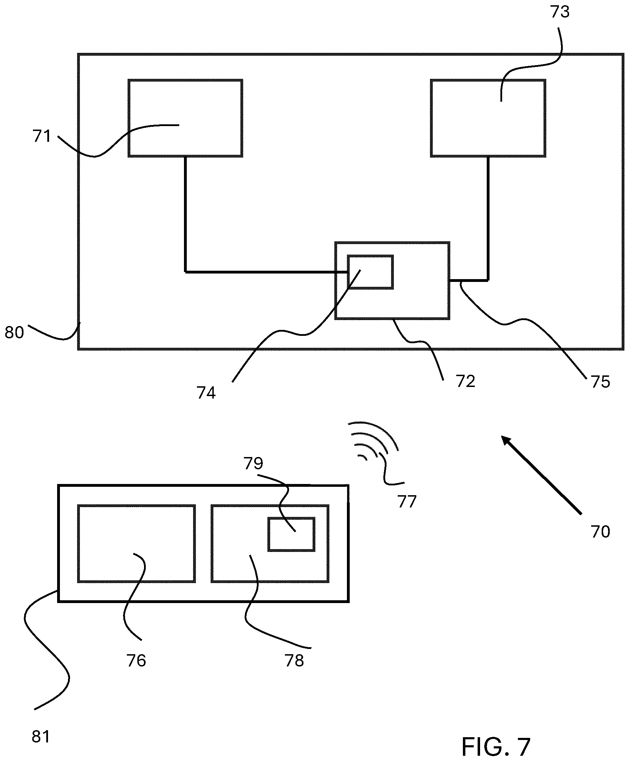

Figure 7 is a schematic diagram of an EPD publishing system. The EPD publishing system 70 comprises a product database 71 comprising product structure parameters and product function parameters for each member of a Homogeneous Product Family (HPF), as well as a processor 72 adapted to carry out the computer implemented method described above. In addition, an accessible storage device 73 is provided and adapted to store the structure parameters, product function parameters and scaling parameters for each member of the HPF. The processor 72 and the product database 71 are adapted to communicate via an application layer 74 on the processor 72, and the processor 72 and the accessible storage device 73 are linked by a memory bus 75. A user input device 76 is provided and linked to the processor 72 via a communication means 77 such as a network (LAN, WLAN, cellular) connection or a communication bus, and a user output device 78 is linked to the processor 72 via a graphics card 79. The user input device 76 enables a user to select a member of the HPF and the user output device 78 enables a user to read or download the published EPD. For example, the user input device 76 may be a combination of a keyboard, mouse, trackpad, touchscreen or any other suitable input device, and the user output device 78 may be a screen or other display device, or a printer. Various elements of the EPD publishing system 70 may be hosted on a server 80, including the processor 72, the product database 71 and the accessible storage device 73. Both the user input 76 and output 78 devices may be part of a client device 81, which uses the communication means 77 to communicate with the server 80. The server may be a remote, physical or desktop server, or a distributed or cloud server. The client device 81 may be a mobile device such as a tablet, laptop or smart phone.

In order to determine the effectiveness of the clustering approach to selecting representative products, a comparison between representatives selected by experts and those selected using clustering was carried out. This was done using the SIMATICS G120M modular multifunctional frequency converter product family available from www.siemens.com. Clustering was performed based on four clusters rather than the three used in the example above, as the expert representative product selection resulted in four products being selected. Clustering was carried out based on the scaling parameters volume and current. Table 3 illustrates the comparison between the expert defined representative products and those found using the clustering method of the embodiments of the present invention:

*Table 3: comparison of expert and mathematical determination of representative products*

| Cluster | | Frame Size | Current (A) | Volume (l) | Deviation from Cluster Centre | | Deviation of Cluster from Expert | |
|---------|----------------|------------|-------------|------------|------|------|------|------|
| C0 | Cluster Centre | | 11.82006 | 4.849847 | | | | |
| | Expert | FSA | 7.7 | 2.36082 | 35% | 51% | | |
| | Method | FSB | 13.20 | 4.82 | -12% | 1% | -71% | -104% |
| C1 | Cluster Centre | | 155.762 | 80.11867 | | | | |
| | Expert | FSF | 250 | 77.09058 | -61% | 4% | | |
| | Method | FSF | 154.00 | 77.09 | 1% | 4% | 38% | 0% |
| C2 | Cluster Centre | | 52.48479 | 26.48539 | | | | |
| | Expert | FSD | 75 | 22.3728 | -43% | 15% | | |
| | Method | FSD | 54.00 | 22.37 | 3% | 16% | 28% | 0% |
| C3 | Cluster Centre | | 365.2856 | 108.885 | | | | |
| | Expert | FSG | 477 | 108.885 | -31% | 0% | | |
| | Method | FSG | 370.00 | 108.89 | -1% | 0% | 22% | 0% |

It can be seen from Table 4 that the mathematically determined clusters correspond roughly with those of the expert assessment, since the same frame size was chosen in three out of four assessments. The representative products chosen by the experts occasionally diverge significantly from the average product structure in terms of volume and current parameters, typically due to high sales volumes of the chosen product configurations. Whilst sales figures represent an important aspect of selection, if used as the primary criterion the chosen representative products are less likely to reflect the average product structure and material composition, leading to inaccuracies in scaling and under- or overestimation of scaled environmental impacts. Therefore, only minor deviations from the mathematical average product should be accepted in favour of sales figures. The most significant deviation is observed in the low impact cluster C0. There, the expert assessment and the algorithm resulted in different frame sizes as suitable representative products. The experts followed the low, medium and high approach, thus choosing the smallest frame size, whereas the use of the *k*-means clustering by the algorithm is based on absolute distances of the product parameters from the cluster centre. This leads to the smaller frame sizes (FSA, FSB and occasionally FSC) being grouped into one cluster. The larger frame sizes exhibit significant higher distances from each other and are therefore considered separately. With smaller frame sizes, therefore, it can be inferred that higher relative inaccuracies may be tolerated to accurately depict the regression curve in favour of the larger product groups. This is illustrated in Figure 8, which is a chart showing the clustering of G120M products. Four clusters are seen (C0 as solid circles, C1 as solid squares, C2 as solid triangles and C3 as solid diamonds) with the representative products shown as stars. This illustrates that the greater the homogeneity and this linearity within an HPF, the less the small-impact products are undervalued in favour of regression. It can also be assumed that when all product parameters correspond to zero, the impact is also absent, meaning that the regression line passes through the origin. The LCA was conducted for each of the representative products in a cradle-to-end-of-life approach, but for scaling purposes, only cradle-to-gate results were used. The described scaling approach is applied to the End-of-Life stage as well. However, use phase and distribution must be calculated using primary data.

The following example employs the embodiments of the present invention described above to determine the effectiveness of the scaling approach for environmental impact categories, using the SINAMICS G220 product family, available from www.siemens.com. The SINAMICS G220 product is a variable frequency drive available in many product variants.

It can be regarded as a homogeneous product family with a complex product structure, and therefore is an excellent trial for single parameter scaling, multiparameter scaling and component scaling. The G220 product is a high-end inverter with a voltage range of 200 - 690 V and a power of up to 3000 kW. It includes sub-groups for Multi-Purpose Drive (GPD), Clean Power Drive (LHD) and Regenerative Drive (RGD). At the time of filing there are two-thousand and seventy-nine (2079) different product configurations, which include widely varying sizes and structures (with frame sizes A to H), as well as electrical performance. The initial HPF was taken to include all product configurations, regardless of structure and size differences, and the selection of the representative products defined by technical experts. In this selection process, the same approach of choosing a low, medium and high environmental impact groupings was followed, with the criterion of energy efficiency being used to select from among similar structures. This resulted in the selection of six product configurations as the representative products, as listed in Table 4:

*Table 4: selected representative products for the HPF*

| Product | Frame Size (FS) | Filter | Protection Class | Voltage Class |
|---|---|---|---|---|
| I | FSA | Unfiltered | IP20 | 230 V |
| II | FSA | Filtered | IP20 | 400 V |
| III | FSD1 | Filtered | IP20 | 400 V |
| IV | FSD1 | Filtered | IP55 | 400 V |
| V | FSE | Unfiltered | IP20 | 400 V |
| VI | FSE | Filtered | IP20 | 400 V |

Table 5 shows the product data for the available scaling parameters for the representative products:

*Table 5: Scaling Parameters*

| | I | II | III | IV | V | VI |
|---|---|---|---|---|---|---|
| Volume | 4.1 | 4.4 | 17.9 | 26.6 | 32.9 | 36.6 |
| Weight | 6.7 | 6.7 | 41.1 | 47.2 | 114.9 | 114.9 |
| Output at 4 kHz | 5.0 | 5.0 | 34.9 | 41.1 | 98.5 | 98.5 |
| Output at 4 kHz According to NEC | 400 | 400 | 400 | 400 | 400 | 400 |
| Voltage | 74.0 | 74.0 | 196.0 | 216.0 | 450.0 | 450.0 |
| Power Loss at Operating Point 0/100 | 75.0 | 75.0 | 207.0 | 229.0 | 484.0 | 484.0 |
| Power Loss at Operating Point 50/100 | 123.0 | 126.0 | 564.0 | 660.0 | 1604.0 | 1634.0 |
| Power Loss at Operating Point 90/100 | 123.0 | 126.0 | 564.0 | 660.0 | 1604.0 | 1634.0 |
| Maximum Power Loss | 540 | 540 | 540 | 540 | 540 | 540 |
| DC Voltage | 4.6 | 4.6 | 28.5 | 32.7 | 79.6 | 79.6 |
| Apparent Power Output/Rated Power | 73.0 | 73.0 | 150.0 | 209.0 | 250.0 | 250.0 |
| Width | 250.0 | 250.0 | 400.0 | 571.0 | 520.0 | 520.0 |
| Height | 420.0 | 420.0 | 650.0 | 857.0 | 803.0 | 803.0 |
| Height with Shield Plate | 218.0 | 218.0 | 255.0 | 324.0 | 255.0 | 255.0 |
| Depth | 0.0003 | 0.0003 | 0.0014 | 0.0014 | 0.0028 | 0.0028 |
| DC Link Voltage | 9.8 | 9.8 | 68.0 | 80.0 | 180.0 | 180.0 |
| Maximum Rated Output Current | 6.5 | 6.5 | 43.0 | 50.0 | 123.0 | 123.0 |
| Output Current Rated Value | 4.0 | 4.0 | 4.0 | 4.0 | 4.0 | 4.0 |
| Pulse Frequency | - | - | - | - | - | - |
| Rated Power @ 230V, High Overload | - | - | - | - | - | - |

(continued)

|  | I | II | III | IV | V | VI |
|---|---|---|---|---|---|---|
| **Rated Power @ 230V, Low Overload** | 1.50 | - | - | - | - | - |
| **Rated Power @ 400V, High Overload** | - | 2.2 | 18.5 | 22.0 | 55.0 | 55.0 |
| **Rated Power @ 400V, Low Overload** | - | - | - | - | - | - |
| **Rated Power @ 690V, High Overload** | - | - | - | - | - | - |
| **Rated Power @ 690V, Low Overload** | - | - | - | - | - | - |

Table 6 shows the results of scaling for the G220 product family using the method in accordance with the embodiments of the present invention described above. For this analysis, only one pair of scaling parameters was used per impact category. The target adjusted $R^2$ value was set at 0.97:

*Table 6: Scaling Results*

| Impact Category | Parameter 1 | Parameter 2 | Adjusted $R^2$ | Target Met |
|---|---|---|---|---|
| **Acidification** | Weight | Width | 0.85 | No |
| **Climate Change Total** | Volume | Width | 0.99 | Yes |
| **Climate Change Biogenic** | Apparent Power Output/Rated Power | Rated Power @ 400V, Low Overload | 1.00 | Yes |
| **Climate Change Fossil** | Output Current/Rated Value | Rated Power @ 400V, Low Overload | 0.99 | Yes |
| **Total Freshwater Ecotoxicity** | Power Loss at Operating Point 90/100 | Output Current/Rated Value | 0.98 | Yes |
| **Freshwater Eutrophication** | Weight | Height Including Shield Plate | 0.92 | No |
| **Marine Eutrophication** | Weight | Width | 0.84 | No |
| **Terrestrial Eutrophication** | Weight | Width | 0.84 | No |
| **Human Toxicity (Cancer, total)** | Output Current at 4 kHz According to NEC | Rated Power @ 400V, Low Overload | 1.00 | Yes |
| **Human Toxicity (non-cancer, total)** | Weight | Height | 1.00 | Yes |
| **Ionising Radiation** | Weight | Output Current at 4 kHz According to NEC | 1.00 | Yes |
| **Land Use** | Volume | Weight | 0.77 | No |
| **Ozone Depletion** | Weight | Width | 0.87 | No |
| **Particulate Matter** | Weight | Width | 0.87 | No |
| **Photochemical Ozone Formation** | Weight | Width | 0.85 | No |
| **Resource Use - Fossil Fuels** | Weight | Depth | 1.00 | Yes |
| **Resource Use - Minerals and Metals** | Power Loss at Operating Point 50/100 | Power Loss at Operating Point 90/100 | 1.00 | Yes |
| **Water Use (m³ World Equivalent)** | Weight | Height Including Shield Plate | 0.93 | No |

In order to ensure that data was evaluated on an equal basis, representative product 1 was discarded as it had a voltage class of 230 V. Representative product VI was discounted as it had the same size and voltage class as representative product V. Three representative products II, III and V were then chosen as the basis of the scaling analysis. It can be seen in Table 6 that the scaling approach was successful in generating an adjusted $R^2$ value of 0.97 or above, with even the lowest adjusted $R^2$ value of 0.77 for Land Use indicating that scaling still occurred, even though it was below the target adjusted $R^2$ value. As outlined above, the scalability may be improved by using different or additional pairs of scaling parameters, as in a multiparameter approach, or it may be possible on the basis of analysis to conclude that a lower adjusted $R^2$ value may be acceptable for an impact category with a Level of Recommendation of III as listed in JRC Technical Reports (2018), Supporting information to the characterisation factors of recommended EF Life Cycle Impact Assessment method, https://eplca.jrc.ec.europa.eu/permalink/supporting_Information_final.pdf

**Claims**

1. A computer-implemented method of generating an Environmental Product Declaration (EPD) for a product, comprising:

   i) generating the base data required for an EPD by:

      a) defining a Homogeneous Product Family (HPF) comprising a plurality of products having similar functions, product standards, materials and manufacturing processes;
      b) querying a product database to obtain product structure parameters and product function parameters for each member of the HPF;
      c) selecting at least three representative members of the HPF;
      d) conducting an LCA according to ISO 14040 for the identified representative members of the HPF over a plurality of environmental impact categories;
      e) determining a scaling function using multiparameter linear regression for each environmental impact category based upon at least one parameter pair comprising a product structure factor and a product function parameter obtained from the product database;
      f) determining a quality indicator indicating the quality of the scaling function;
      g) for a quality indicator greater than or equal to a pre-determined threshold, storing the respective scaling functions with the product data for the corresponding product in the HPF in the product database; and
      h) determining and associating a reference product to provide base data required for an EPD with each product in the HPF;
      and,

   ii) generating an EPD by

      i) selecting a product in the product database for which the base data required for the EPD is available;
      j) accessing the respective scaling functions within the product's HPF for each environmental impact category from the product database, the product data of the associated reference product; and
      k) on the basis of the scaling functions, the base data and the product data of the associated reference product, generating the EPD for the selected product.

2. A computer-implemented method as claimed in claim 1, wherein the associated reference product is one of the representative members of the HPF.

3. A computer-implemented method as claimed in claim 1 or 2, wherein the EPD is generated on-demand.

4. A computer-implemented method as claimed in claim 1, 2 or 3, wherein the base data for the EPD is generated on-demand.

5. A computer-implemented method as claimed in any preceding claim, wherein the step of selecting the at least three representative members from the HPF comprises assigning each member of the HPF an $n$-dimensional vector ins a $n$-dimensional product characteristic space based upon the product parameters, wherein the product parameters comprise at least one structure parameter and function parameter.

6. A computer-implemented method as claimed in claim 5, wherein a clustering method is used to determine the proximity of the assigned $n$-dimensional vector to the n-dimensional cluster centre.

7. A computer-implemented method as claimed in claim 6, wherein the clustering method is k-means.

8. A computer-implemented method as claimed in claim 7, wherein the three representative members of the HPF are selected on the basis of the nearest neighbour to a cluster centre.

9. A computer-implemented method as claimed in claim 7, wherein a confidence interval is applied to the cluster centre, and the three representative members of the HPF are selected on the basis of the confidence interval and an economic criterion.

10. A computer-implemented method as claimed in any preceding claim, wherein if the quality indicator is below a pre-determined threshold, the method further comprises optimising the scaling function based on at least one of:

    selecting a new representative member of the HPF;
    determining a scaling function for every possible pair of structure parameters and function parameters stored in the product database for each member of the HPF; or
    revising the members of the HPF.

11. A computer-implemented method as claimed in any preceding claim, wherein the step of determining the scaling functions comprises determining a scaling function for every possible pair of structure parameters and function parameters stored in the product database for each member of the HPF.

12. A computer-implemented method as claimed in any preceding claim, wherein the quality indicator is an adjusted $R^2$ value.

13. A computer-implemented method as claimed in any preceding claim, wherein the generated EPD is published either in a downloadable file format or as data storable as a database entry.

14. An Environmental Product Declaration (EPD) publishing system, comprising:

    a product database comprising product structure parameters and product function parameters for each member of a Homogeneous Product Family (HPF);
    a processor adapted to carry out the computer implemented method of any preceding claim:

        an accessible storage device adapted to store the structure parameters, product function parameters and scaling parameters for each member of the HPF;
        wherein the processor and the product database are adapted to communicate via an application layer on the processor, and the processor and the accessible storage device are linked by a memory bus.

15. An Environmental Product Declaration (EPD) publishing system as claimed in claim 14, further comprising a user input device linked to the processor via a communication bus and a user output device linked to the processor via a graphics card, wherein the user input device enables a user to select a member of the HPF and the user output device enables a user to read or download the published EPD.

16. A computer-implemented method as claimed in any of claims 1 to 13, or an Environmental Product Declaration (EPD) publishing system as claimed in claims 14 or 15, wherein the HPF is defined in accordance with EN 50693:2019, the LCA is calculated in accordance with ISO 14040 and the EPD is published based on the requirements of ISO 14025.

100

| 102 |
| 104 |
| 106 |
| 108 |
| 110 |
| 112 |

(i)

| 114 |

| 116 |
| 118 |
| 120 |
| 122 |

(ii)

FIG. 1

FIG. 2

FIG. 2a

FIG. 2b

FIG. 3

FIG. 4

FIG. 5

FIG. 6

FIG. 7

Europäisches
Patentamt
European
Patent Office
Office européen
des brevets

## EUROPEAN SEARCH REPORT

**Application Number**

EP 24 19 6629

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "IEC 63366 ED1: Product category rules for life cycle assessment of electrical and electronic products and systems", 111/691/CDV, IEC, 3, RUE DE VAREMBÉ, PO BOX 131, CH-1211 GENEVA 20, SWITZERLAND , 10 March 2023 (2023-03-10), pages 1-50, XP082045729, Retrieved from the Internet: URL:https://api.iec.ch/harmonized/document s/download/3167963 [retrieved on 2023-03-10] * Pages 6, 7, 10, 13, 14, 23, 24, 26, 34 * ----- | 1-16 | INV. G06Q30/018 G06Q10/04 G06Q10/063 |
| A | US 2017/278113 A1 (PANIKKAR SHIBI [IN] ET AL) 28 September 2017 (2017-09-28) * paragraphs [0003], [0015] - [0017], [0029], [0071] - [0072] * * figures 4, 5, 6, 7 * ----- | 1-16 | |
| A | Sala Serenella ET AL: "Life cycle assessment for the impact assessment of policies", JCR technical reports, 1 January 2016 (2016-01-01), pages 1-57, XP093240470, DOI: 10.2788/318544 Retrieved from the Internet: URL:https://op.europa.eu/s/obox [retrieved on 2016-01-01] * Pages 2, 3, 14, 15 * ----- | 1-16 | **TECHNICAL FIELDS SEARCHED (IPC)** G06Q |

The present search report has been drawn up for all claims

| Place of search | Date of completion of the search | Examiner |
|---|---|---|
| Munich | 17 January 2025 | Volpato, Gian Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 6629

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2025

| Patent document cited in search report | Publication date | Patent family member(s) | Publication date |
|---|---|---|---|
| US 2017278113 A1 | 28-09-2017 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *EPD International*, 2024, 27

- Supporting information to the characterisation factors of recommended EF Life Cycle Impact Assessment method. *JRC Technical Reports*, 2018, https://eplca.jrc.ec.europa.eu/permalink/supporting_Information_final.pdf